# EUROPÄISCHE PATENTSCHRIFT

(11) **EP 2 065 012 B1**
(45) Veröffentlichungstag und Bekanntmachung des Hinweises auf die Patenterteilung: **14.04.2010**
(21) Anmeldenummer: 07023059.4
(22) Anmeldetag: 28.11.2007
(51) Int. Cl.: A61C 13/00, A61C 13/08, A61C 13/20

(54) **Verfahren und System zur Herstellung von dentalen Restaurationen aus Keramik**
Method and system for manufacturing dental restorations made of ceramic
Procédé et système de fabrication de restaurations dentaires en céramique

(43) Veröffentlichungstag der Anmeldung: 03.06.2009
(73) Patentinhaber: Ivoclar Vivadent AG, 9494 Schaan (LI)
(72) Erfinder: Cadario, Vittorio, 9470 Buchs SG (CH); Bürke, Harald, 6820 Franstanz (AT); Schweiger, Marcel, 9000 Chur (CH); Rheinberger, Volker, 9490 Vaduz (LI)
(74) Vertreter: UEXKÜLL & STOLBERG

(56) Entgegenhaltungen:
- EP-A- 1 859 757
- DE-A1- 10 241 857
- DE-A1- 19 714 178
- GB-A- 514 830

## Beschreibung

Die vorliegende Erfindung betrifft ein Verfahren und ein System zur Herstellung von dentalen Restaurationen aus Keramik zur Erzielung von natürlich wirkenden Farb- und Opazitätsgradienten.

Zur Herstellung von dentalen Restaurationen aus Keramik ist ein Einpressverfahren bekannte wie es zum Beispiel in der EP 0 231 773 A1 oder der US 5,702,514 A beschrieben ist.

Dabei wird ein Modell einer dentalen Restauration aus einem vollständig ausbrennbaren Material an einen den späteren Gusskanal bildenden Strang innerhalb einer Pressmuffel angebracht und die Pressmuffel mit einer Einbettmasse gefüllt, sodass das Modell vollständig von der Einbettmasse umgeben wird. Die Einbettmasse wird zu einer feuerfesten Pressform ausgehärtet und das Modell wird ausgebrannt, um den einer dentalen Restauration entsprechenden Formhohlraum in der ausgehärteten Pressform zu erzeugen. Ein keramisches Material wird dann unter Druckanwendung durch den Gusskanal in die Pressform gepresst, um den der dentalen Restauration entsprechenden Formhohlraum zu füllen und somit die dentale Restauration aus dem keramischen Material zu erzeugen.

Nachteilig an den bekannten Verfahren und Systemen ist es, dass die bekannten Einpressverfahren sich lediglich für einfarbige dentale Restaurationen eignen. Möchte man die Farb- und Opazitätsgradienten, die bei einem natürlichen Zahn in großer Vielfalt vorhanden sein können, in der dentalen Restauration naturgetreu nachahmen, so ist gemäß des Standes der Technik eine nachträgliche Oberflächenbehandlung wie zum Beispiel durch Bemalen oder Beschichten unerlässlich. Solch eine nachträgliche Oberflächenbehandlung ist wegen der damit verbundenen Handarbeit umständlich und teuer.

Dokument DE 19 714 178 offenbart ein Verfahren gemäß dem Oberbegriff des Anspruchs 1.

Es ist daher die Aufgabe der vorliegenden Erfindung, ein Verfahren bzw. ein System zur Herstellung von dentalen Restaurationen aus Keramik bereitzustellen, wobei natürlich wirkende Farb- und Opazitätsgradienten ohne nachträgliche Oberflächenbeschichtung erzielt werden.

Diese Aufgabe wird erfindungsgemäß durch die kennzeichnenden Merkmale der unabhängigen Ansprüche 1, 5 bzw. 21 in Verbindung mit den jeweiligen Oberbegriffen gelöst.

Gemäß einem ersten Aspekt der vorliegenden Erfindung wird ein Verfahren zur Herstellung von dentalen Restaurationen aus Keramik zur Erzielung von natürlich wirkenden Farb- und Opazitätsgradienten bereitgestellt, wobei ein Formkörper aus Keramik durch ein Kanalsystem in einer Pressform ganz oder teilweise in einen einer dentalen Restauration entsprechenden Formhohlraum in der Pressform gepresst wird, dadurch gekennzeichnet; dass der Formkörper einen ersten Volumenbereich und einen zweiten Volumenbereich aufweist, wobei sich der zweite Volumenbereich durch eine unterschiedliche Farbe oder Opazität von dem ersten Volumenbereich unterscheidet, und das Kanalsystem in der Pressform den Formkörper beim Einpressen so in den Formhohlraum leitet, dass Material des ersten Volumenbereichs den Formhohlraum zeitlich eher erreicht als Material des zweiten Volumenbereichs und/oder mehr Material des ersten Volumenbereichs in den Formhohlraum gepresst wird als Material des zweiten Volumenbereichs.

Gemäß einem zweiten Aspekt der vorliegenden Erfindung wird ein System zur Herstellung von dentalen Restaurationen aus Keramik zur Erzielung von natürlich wirkenden Farb- und Opazitätsgradienten bereitgestellt, wobei das System einen Formkörper aus Keramik oder Kunststoff, eine Pressmuffelbasis und ein Anstiftsystem aus vollständig ausbrennbaren Material umfasst, wobei das Anstiftsystem dazu dient, ein Modell einer dentalen Restauration aus vollständig ausbrennbaren Material an die Pressmuffelbasis anzubringen, sodass sich mittels des mit dem Anstiftsystem an die Pressmuffelbasis angebrachten Modells eine Pressform mit einem dem Anstiftsystem entsprechenden Kanalsystem und einem dem Modell entsprechenden Formhohlraum erzeugen lässt, und eine somit erzeugte Pressform sich für ein Einpressen des Formkörpers in den Formhohlraum der Pressform eignet, dadurch gekennzeichnet, dass der Formkörper einen ersten Volumenbereich und einen zweiten Volumenbereich aufweist, wobei sich der zweite Volumenbereich durch eine unterschiedliche Farbe oder Opazität von dem ersten Volumenbereich unterscheidet, und das Anstiftsystem vorgefertigt und derart ausgestaltet ist, sodass das bei einer Erzeugung der Pressform entstehende Kanalsystem zwei Fließwege aufweist, wobei der zweite Fließweg ein größeres Volumen hat als der erste Fließweg, und wobei bei einem Einpressen Material des ersten Volumenbereichs durch den ersten Fließweg in den Formhohlraum gepresst wird und Material des zweiten Volumenbereichs durch den zweiten Fließweg in den Formhohlraum gepresst wird.

Gemäß einem dritten Aspekt der vorliegenden Erfindung wird eine Verwendung eines Formkörpers aus Keramik zur Herstellung von dentalen Restaurationen aus Keramik zur Erzielung von natürlich wirkenden Farb- und Opazitätsgradienten bereitgestellt, wobei der Formkörper einen ersten Volumenbereich und einen zweiten Volumenbereich aufweist, wobei sich der zweite Volumenbereich durch eine unterschiedliche Farbe oder Opazität von dem ersten Volumenbereich unterscheidet, dadurch gekennzeichnet, dass der Formkörper durch ein Kanalsystem in einer Pressform ganz oder teilweise in einen einer dentalen Restauration entsprechenden Formhohlraum in der Pressform gepresst wird, und das Kanalsystem in der Pressform den Formkörper beim Einpressen so in den Formhohlraum leitet, dass Material des ersten Volumenbereichs den Formhohlraum zeitlich eher erreicht als Material des zweiten Volumenbereichs und/oder mehr Material des ersten Volumenbereichs in den Formhohlraum gepresst wird als Material des zweiten Volumenbereichs.

Der Begriff "dentale Restauration" umfasst in dieser Beschreibung Kronen, Teilkronen, Veneers, Brücken, Abutments oder sonstige Zahnersatzteile. Die vorliegende Erfindung ist auch zum Überpressen von Gerüsten aus Keramik, Metall oder Metalllegierungen geeignet. Der Begriff "Fließweg" bedeutet hierin der Weg, dem eine Fließfront von Material eines Volumenbereichs des Formkörpers beim Einpressen folgt. Das Volumen eines Fließwegs bestimmt sich durch die entlang des Fließwegs von der Fließfront von Material eines Volumenbereichs durchströmte Fläche mal der Länge des Fließwegs. Der Fließweg kann sich dabei gemäß der Ausgestaltung des Kanalsystems aufspalten und Verzweigungen bilden, die nicht in den Formhohlraum führen. Fließwege verschiedener Volumenbereiche müssen nicht durch getrennte Kanäle im Kanalsystem verlaufen, sondern können auch durch einen gemeinsamen Kanal verlaufen. Das gesamte Volumen eines Fließwegs bestimmt sich durch das Volumen des Kanalsystems, das nach dem Einpressen durch ein Material eines Volumenbereichs des Formkörpers eingenommen wird.

Die Erfindung umfasst dabei auch Verfahren, Systeme und Verwendungen zur gleichzeitigen oder nicht gleichzeitigen Herstellung einer beliebigen Anzahl von dentalen Restaurationen mit gleichen oder unterschiedlichen Farb- und Opazitätsgradienten unter Einsatz von einem oder mehreren Kanalsystemen bzw. Anstiftsystemen.

In einer bevorzugten Ausführungsform des erfindungsgemäßen Verfahrens werden das Kanalsystem und der einer dentalen Restauration entsprechende Formhohlraum mittels eines aus vollständig ausbrennbaren Material wie Plexiglas oder Wachs vorgefertigten Anstiftsystems erzeugt, indem vor dem Einpressen ein Modell einer dentalen Restauration aus vollständig ausbrennbaren Material über das Anstiftsystem an eine Pressmuffelbasis einer Pressmuffel angebracht wird. Die Pressmuffel wird daraufhin mit einer Einbettmasse gefüllt, sodass das Modell und das Anstiftsystem vollständig von der Einbettmasse umgeben werden. Dann wird die Einbettmasse zu einer feuerfesten Pressform ausgehärtet und das Modell sowie das Anstiftsystem werden ausgebrannt, um den einer dentalen Restauration entsprechenden Formhohlraum und das Kanalsystem in der ausgehärteten Pressform zu erzeugen.

Vorzugsweise wird hierbei das Modell einer dentalen Restauration mesial oder distal mit dem Anstiftsystem verbunden. Dies hat den Vorteil gegenüber einer okklusalen Anstiftung des Modells, dass die spätere Abtrennung des Kanalsystems einfacher ist und die Geometrie der gegenüberliegenden Zähne nicht berücksichtigt werden muss.

Um nun direkt durch das Einpressen natürlich wirkende Farb- und Opazitätsgradienten in einer dentalen Restauration zu erzeugen, weist der Formkörper erfindungsgemäß einen ersten Volumenbereich und einen zweiten Volumenbereich auf, wobei sich der zweite Volumenbereich durch eine unterschiedliche Farbe oder Opazität von dem ersten Volumenbereich unterscheidet. Bei den verschiedenen Volumenbereichen kann es sich zum Beispiel um eine Dentinmasse und eine Schneidemasse für die dentale Restauration handeln. Häufig wird auch ein dritter Volumenbereich verwendet, der einer cervicalen Dentinmasse entspricht. Die Anzahl der Volumenbereiche ist prinzipiell unbeschränkt.

Unter der Druckeinwirkung beim Einpressen des Formkörpers mit ggf. vorheriger oder gleichzeitiger Erwärmung des Formkörpers wird das Material des Formkörpers, d.h. die Keramik oder der Kunststoff, viskos bzw. fließfähig und kann in einen einer dentalen Restauration entsprechenden Formhohlraum in der Pressform gepresst werden. Dabei leitet das Kanalsystem in der Pressform beim Einpressen den Formkörper in den Formhohlraum.

Gemäß des Verfahrens der vorliegenden Erfindung wird der beim Einpressen fließfähige Formkörper so in einen einer dentalen Restauration entsprechenden Formhohlraum geleitet, dass der erste Volumenbereich des Formkörpers den Formhohlraum zeitlich vor dem zweiten Volumenbereich erreicht. Dadurch werden in der dentalen Restauration natürlich wirkende Farb- und Opazitätsgradienten erreicht, ohne dass es einer nachträglichen aufwändigen Beschichtung und farblichen Charakterisierung bedarf. Sowohl der nominelle Volumenanteil sowie die räumliche Position der einzelnen Volumenbereiche in der dentalen Restauration werden so durch das Kanalsystem gesteuert. Die dentale Restauration wirkt durch die durch das Kanalsystem gesteuerte Verteilung der verschiedenfarbigen bzw. -transparenten Volumenbereiche des Formkörpers besonders natürlich.

Bei dem erfindungsgemäßen Verfahren bezeichnet der Formkörper aus Keramik einen Pressrohling, der einstückig oder mehrteilig ausgebildet sein kann. Im Falle eines mehrteiligen Formkörpers werden die einzelnen Teile vor dem eigentlichen Einpressvorgang, durch eine Erwärmung oder ein Zusammenpressen zusammengeschmolzen. Vorzugsweise stellt in diesem Fall jeder einzelne Teil einen Volumenbereich mit einer bestimmten Farbe und/oder Opazität dar.

Vorzugsweise ist der Farb- oder Opazitätsgradient zwischen den beiden Volumenbereichen des Formkörpers stetig und graduell, wie es den Farbverläufen in einem natürlichen Zahn entspricht. Der Formkörper weist vorzugsweise eine Einpressrichtung auf, entlang derer die Querschnittsform des Formkörpers konstant ist, sodass der Formkörper entlang der Einpressrichtung in die Pressform gepresst werden kann. Die Form des Formkörpers kann insbesondere im Wesentlichen zylindrisch sein.

Es gibt verschiedene Möglichkeiten, wie die Volumenbereiche mit verschiedenen Farb- oder Opazitätsgradienten in dem Formkörper verteilt sind. Zum einen können die Volumenbereiche sich im Wesentlichen entlang der Einpressrichtung erstrecken und im Wesentlichen an einer Ebene mit einer Normalen, die im Wesentlichen senkrecht zur Einpressrichtung des Formkörpers verläuft, einander angrenzen. Alternativ dazu können die Volumenbereiche im Wesentlichen jeweils eine Schicht des Formkörpers ausmachen und im Wesentlichen an einer Ebene mit einer Normalen, die im Wesentlichen parallel zur Einpressrichtung des Formkörpers verläuft, einander angrenzen. Darüber hinaus ist es auch möglich, dass die Volumenbereiche jeweils ein Stück des Formkörpers ausmachen und im Wesentlichen an einer Ebene mit einer Normalen, die schräg zur Einpressrichtung des Formkörpers verläuft, einander angrenzen.

Vorteilhafterweise weist der Formkörper nicht nur einen ersten und einen zweiten Volumenbereich auf, sondern mindestens einen weiteren Volumenbereich, der sich durch eine unterschiedliche Farbe oder Opazität von einem benachbarten Volumenbereich unterscheidet.

Entsprechend der Ausgestaltung des Formkörpers mit den mindestens zwei Volumenbereichen mit unterschiedlicher Farbe und/oder Opazität muss das Kanalsystem in der Pressform an den Formkörper angepasst ausgestaltet sein. Dies wird vorteilhafterweise durch ein vorgefertigtes Anstiftsystem gewährleistet, das zu einem bestimmten Formkörper passt. Das Kanalsystem muss sicherstellen, das ein Volumenbereich des Formkörpers den Formhohlraum zeitlich vor dem anderen Volumenbereich erreicht Dies kann beispielsweise durch ein Kanalsystem erreicht werden, das zwei Fließwege aufweist, wobei der zweite Fließweg ein größeres Volumen hat als der erste Fließweg, und wobei beim Einpressen der erste Volumenbereich durch den ersten Fließweg in den Formhohlraum gepresst wird und der zweite Volumenbereich durch den zweiten Fließweg in den Formhohlraum gepresst wird. Dabei können die Fließwege teilweise separate Kanäle sein, müssen es jedoch nicht sein. Es können beide Fließwege durch einen gemeinsamen Kanal führen, wobei das Kanalsystem sicherstellt, dass beim Einpressen ein Volumenbereich des Formkörpers ein größeres Volumen des Kanalsystems als der andere Volumenbereich füllt. Da beim Einpressen innerhalb des gesamten Kanalsystems einheitlicher Druck herrscht, also auch entlang beider Fließwege, erreicht derjenige Volumenbereich, der ein größeres Volumen im Kanalsystem füllt, den Formhohlraum später als derjenige, der ein kleineres Volumen im Kanalsystem füllt. Der Unterschied des Volumens in den Fließwegen kann beispielsweise dadurch erreicht werden, dass das Anstiftsystem mit einer Ausdehnung in Form eines Fortsatzes ausgestaltet ist, sodass sich bei einer Erzeugung der Pressform ein dem Fortsatz entsprechendes Reservoir als Teil des zweiten Fließwegs ergibt. Dadurch wird beim Einpressen zunächst das Reservoir mit einem Volumenbereich gefüllt, sodass dieser Volumenbereich zeitlich später als der andere Volumenbereich den Formhohlraum erreicht.

Die Ausgestaltung in Form eines Fortsatzes hat weiterhin den Vorteil, dass durch ein Kürzen des Fortsatzes vor der Erzeugung der Pressform das Volumen der Ausdehnung, und somit des sich ergebenden Reservoirs, verkleinert werden kann. Das Anstiftsystem kann somit den gewünschten Farb- oder Opazitätsgradienten in der dentalen Restauration angepasst werden.

Es kann sinnvoll sein, dass der Formkörper keine genaue Rotationssymmetrie entlang der Einpressrichtung aufweist. Das ist ist insbesondere dann der Fall, wenn die Volumenbereiche so in dem Formkörper angeordnet sind, dass sich keine Rotationssymmetrie ergibt, also die Volumenbereiche nicht scheibenförmige Bereiche des Formkörpers ausmachen. Mit einer gestörten Rotationssymmetrie ergibt sich innerhalb der Pressform eine eindeutige Orientierung des Formkörpers in einer Ebene mit einer Normalen, die im Wesentlichen parallel zur Einpressrichtung des Formkörpers verläuft. Der Formkörper befindet sich vor dem Einpressen in einem Pressraum innerhalb der Pressform, wobei der Pressraum bei der Erzeugung der Pressform durch eine Ausnehmung der Pressmuffelbasis entsteht. Somit sollte die Form der Ausnehmung der Pressmuffelbasis im Wesentlichen der äußeren Form des Formkörpers entsprechen. Insofern ist eine gestörte Rotationssymmetrie des Formkörpers nur sinnvoll, wenn die Ausnehmung der Pressmuffelbasis eine entsprechende gestörte Rotationssymmetrie aufweist. Damit kann vor der Erzeugung der Pressform durch die Anordnung des Anstiftsystems an der Ausnehmung der Pressmuffelbasis eine eindeutige Orientierung des Formkörpers beim Einsetzen in den Pressraum zum Einpressen gewährleistet werden.

Für mehrteilige Formkörper, die vom Benutzer beliebig zu einem Formkörper zum Einpressen zusammengestellt werden können, kann es außerdem sinnvoll sein, wenn die Höhe der Ausnehmung der Pressmuffelbasis einstellbar ist, sodass sich bei der Erzeugung der Pressform durch die eingestellte Höhe der Ausnehmung ein Pressraum mit entsprechender Tiefe in der Pressform ergibt. Der Formkörper ist somit nicht auf eine bestimmte Höhe beschränkt.

Im Folgenden wird die vorliegende Erfindung anhand von Zeichnungen erläutert, die lediglich ein bevorzugtes Ausführungsbeispiel darstellen. In den Zeichnungen zeigt
- Fig. 1: eine schematische Darstellung einer ersten bevorzug- ten Ausführungsform des erfindungsgemäßen Verfahrens bzw. Systems während der Erzeugung der Pressform mit einem Anstiftsystem und einem Modell einer dentalen Restauration,
- Fig. 2: eine schematische Darstellung einer ersten bevorzug- ten Ausführungsform des erfindungsgemäßen Verfahrens bzw. Systems nach der Erzeugung der Pressform mit ei- nem Kanalsystem, einem Formhohlraum und einem in den Pressraum der Pressform eingesetzten Formkörper vor dem Einpressvorgang,
- Fig. 3: mögliche Ausführungsformen des Formkörpers des erfin- dungsgemäßen Verfahrens bzw. Systems,
- Fig. 4: mögliche Ausführungsformen des Formkörpers bzw. der Ausnehmung der Pressmuffelbasis des erfindungsgemäßen Verfahrens bzw. Systems zur eindeutigen Orientierung des Formkörpers in der Pressform,
- Fig. 5: eine detaillierte Darstellung einer ersten bevorzug- ten Ausführungsform des erfindungsgemäßen Verfahrens bzw. Systems während des Einpressvorgangs,
- Fig. 6: eine detaillierte Darstellung einer zweiten bevorzug- ten Ausführungsform des erfindungsgemäßen Verfahrens bzw. Systems vor dem Einpressvorgang,
- Fig. 7: eine detaillierte Darstellung einer zweiten alterna- tiven bevorzugten Ausführungsform des erfindungsgemä- ßen Verfahrens bzw. Systems während des Einpressvor- gangs,
- Fig. 8: eine detaillierte Darstellung einer zweiten bevorzug- ten Ausführungsform des erfindungsgemäßen Verfahrens bzw. Systems nach dem Einpressvorgang,
- Fig. 9: mögliche Ausführungsformen des Anstiftsystems zur Er- beugung eines Kanalsystems des erfindungsgemäßen Ver- fahrens bzw. Systems,
- Fig. 10: weitere mögliche Ausführungsformen des Anstiftsystems zur Erzeugung eines Kanalsystems des erfindungsgemä- ßen Verfahrens bzw. Systems im Zusammenhang mit pa- senden Ausnehmungen der Pressmuffelbasis:

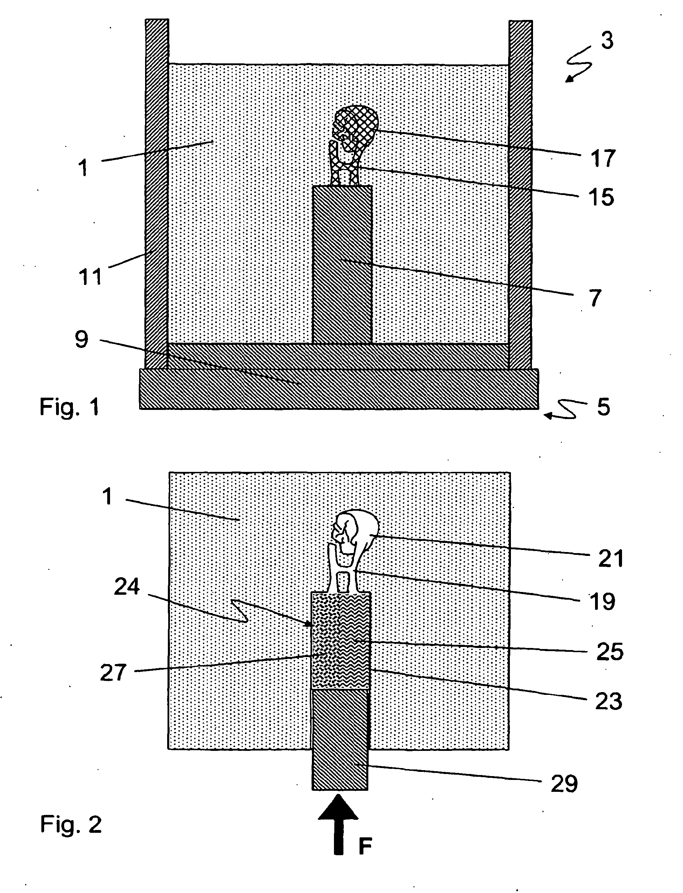

Figur 1 zeigt wie eine Pressform 1 mittels einer Pressmuffel 3 mit einer Pressmuffelbasis 5 erzeugt wird. Die Pressmuffelbasis 5 weist dabei eine zylinderförmige Ausnehmung 7 auf, die sich vom tellerförmigen Boden 9 der Pressmuffelbasis 5 nach oben erstreckt. Eine Pressmuffelhülse 11 ist auf den. Boden 9 gesteckt, schließt am unteren Rand dicht mit dem Boden 9 ab und.bildet somit zusammen mit dem Boden 9 eine äußere Füllform. Auf der oberen Stirnseite der zylinderförmigen Ausnehmung 7 ist ein Anstiftsystem 15 aus vollständig ausbrennbaren. Material, wie z.B. Plexiglas oder Wachs, aufgesetzt. Das Anstiftsystem 15 ist in dieser Ausführungsform H-förmig, wobei es aufrecht mit beiden Beinen der H-Form auf die Ausnehmung 7 aufgesetzt ist und an einem Bein der H-Form ein Modell 17 einer dentalen Restauration aus ebenfalls vollständig ausbrennbaren Material, wie z.B. Plexiglas oder Wachs, angebracht ist. Die Pressmuffel 3 ist mit einer Einbettmasse gefüllt, die die Ausnehmung 7, das Anstiftsystem 15 und das Modell 17 vollständig umgibt. Die Einbettmasse kann eine gipsähnliche, phosphatgebundene Zusammensetzung haben mit z.B. Quarzmehl und ist zunächst fließfähig und härtet nach dem Einfüllen zu der Pressform 1 aus. Nach dem Aushärten kann die Pressmuffel 3, also die Pressmuffelbasis 5, d.h. Boden 9 und Ausnehmung 7, und die Pressmuffelhülse 11, von der Pressform 1 gelöst werden. Durch Ausbrennen wird das Material des Anstiftsystems 15 und des Modells 17 rückstandsfrei verbrannt.

In Figur 2 ist die Pressform 1 nach dem Ausbrennen gezeigt, wobei durch das ausgebrannte Anstiftsystems 15 ein Kanalsystem 19, durch das ausgebrannte Modell 17 ein der dentalen Restauration entsprechender Formhohlraum 21 und durch die entfernte Pressmuffelbasis 5, die sich mit der Ausnehmung 7 in die Pressform 1 erstreckt hat, ein Pressraum 23 in der Pressform 1 entstanden. In den Pressraum 23 ist ein Formkörper 24 eingesetzt, der einen ersten Volumenbereich 25 und einen zweiten Volumenbereich 27 aufweist. Die Volumenbereiche 25, 26 unterscheiden sich durch ihre Farbe und/oder Opazität voneinander. Wenngleich in der Darstellung ein scharfer Übergang von ersten Volumenbereiche 25 zum zweiten Volumenbereich 26 suggeriert wird, weisen die Volumenbereiche 25, 26 entsprechend der natürlichen Farbverläufe im Zahn stetige, graduelle und fließende Übergänge auf. Der Formkörper 24 hat die gleiche äußere Zylinderform wie die Ausnehmung 7 der Pressmuffelbasis 5, sodass er passgenau in den Pressraum 23 eingesetzt werden kann. Ein Presskolben 29 mit ebenfalls der gleichen Zylinderform kann nun den Formkörper 24 durch das Kanalsystem 19 in den Formhohlraum 21 pressen, sobald der Formkörper 24 unter Wärme- und/oder Druckeinwirkung viskos bzw. fließfähig geworden ist. In dieser Ausführungsform sind die beiden Volumenbereiche 25, 26 jeweils ein Halbzylinder des Formkörpers 24, die einander an einer Grenzfläche angrenzen, die ein Normale hat, die senkrecht zur Einpressrichtung verläuft, die durch den Kraftpfeil F angedeutet ist. Der Formkörper 24 ist so orientiert, dass eine Stirnseite des ersten Volumenbereichs 25 vor dem Einpressen direkt vor dem Bein des H-förmigen Kanalsystems 19 in den Formhohlraum 21 angeordnet ist, an das sich der Formhohlraum 21 direkt anschließt. Das andere Bein des H-förmigen Kanalsystems 19 weist im oberen Teil einen Blindkanal 33 auf, der nicht direkt, sondern nur über den Querkanal und den oberen Teils des anderen Beins mit dem Formhohlraum 21 verbunden ist. Der zweite Volumenbereich 27 steht vor dem Einpressen mit einer Stirnseite direkt vor dem Bein mit dem Blindkanal 33, sodass der zweite Volumenbereich 27 nur über den Querkanal und den oberen Teil des anderen Beins den Formhohlraum 21 erreichen kann. Da die Einpressrichtung, wie durch den Kraftpfeil F angedeutet, in Längsrichtung der Beine des H-förmigen Kanalsystems 19 verläuft, wird beim Einpressen zunächst der Blindkanal 33 mit dem zweite Volumenbereich 27 befüllt, bevor der Druck den zweiten Volumenbereich 27 seitlich durch den Querkanal und schließlich durch den oberen Teil des mit dem Formhohlraum 21 direkt verbundenen Beins in den Formhohlraum 21 presst. Da der Fließweg des zweiten Volumenbereich 27 im Kanalsystem 19 ein größeres Volumen hat als der Fließweg des ersten Volumenbereichs 25 im Kanalsystem 19, erreicht der erste Volumenbereich 25 den Formhohlraum 21 vor dem zweiten Volumenbereichs 27. Dadurch wird ein größerer Volumenanteil des Formhohlraums 21 durch den erste Volumenbereich 25 gefüllt als durch den dem zweiten Volumenbereichs 27.

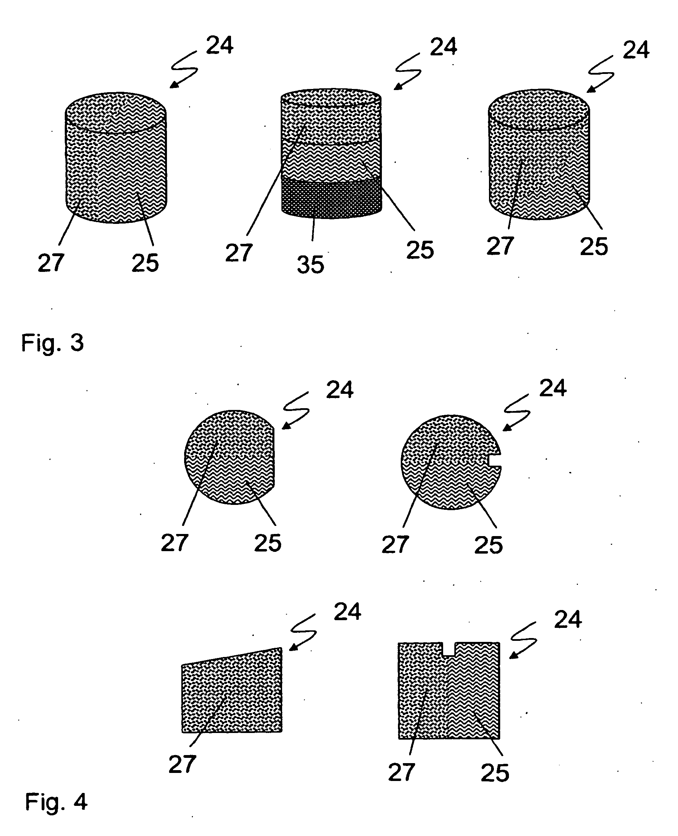

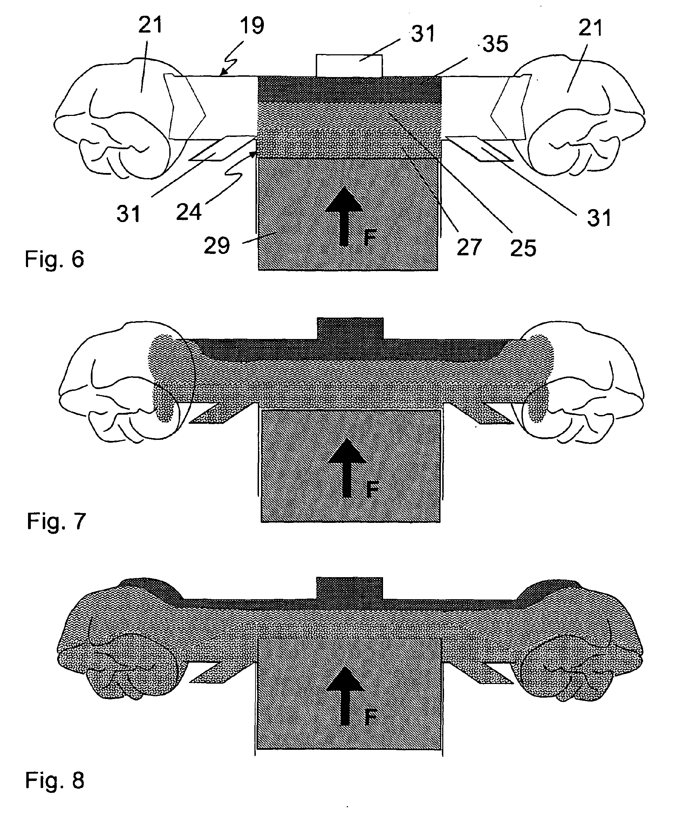

In Figur 3 sind mögliche Ausgestaltungen des Formkörpers 24 gezeigt. Wenngleich nur zylindrische Formen des Formkörpers 24 gezeigt sind, so ist auch jede andere Form denkbar, die entlang einer Einpressrichtung eine konstante Querschnittsform hat. Die Volumenbereiche 25, 26 können auf vielerlei Art in dem Formkörper 24 verteilt sein. In Figur 3a ist eine Verteilung der Volumenbereiche 25, 26 als Halbzylinder entsprechend des Ausführungsbeispiels aus Figur 2 gezeigt. Figur 3b zeigt die einzelnen Volumenbereiche 25, 26 als Scheiben. Der Formkörper 24 kann neben den Volumenbereichen 25, 26 auch einen weiteren Volumenbereich 35 oder mehrere weitere Volumenbereiche aufweisen. Bei der Verteilung der Volumenbereiche 25, 26, 35 als Scheiben ist eine Ausgestaltung des Kanalsystems 19 wie in Figur 2 ungeeignet, und es müsste ein Kanalsystems 19 bzw. ein Anstiftsystem 15 mit einer Ausgestaltung wie in den Figuren 7, 8, 9 und 11 gezeigt verwendet werden. Es ist allerdings vorteilhaft, dass es sich bei der Ausgestaltung der Volumenbereiche als Scheiben anbietet, den Formkörper 24 mehrteilig zur Verfügung zu stellen. Die einzelnen Teile in Scheibenform bilden dabei dann vorteilhafterweise jeweils einen Volumenbereich. Die Anordnung der einzelnen Teile kann dann vom Benutzer beliebig zusammengestellt werden. Vor dem eigentlichen Einpressvorgang werden die einzelnen Teile dann zu einem Formkörper 24 mit den entsprechenden Volumenbereichen unter Wärme- und/oder Druckeinwirkung zusammengeschmolzen. Figur 3c zeigt, das auch eine zur Einpressrichtung schräg orientierte Grenzfläche zwischen den Volumenbereichen denkbar ist.

Für die Ausgestaltungen des Formkörpers 24 gemäß den Figuren 3a und 3c oder jeder anderen Ausgestaltung, bei der die einzelnen Volumenbereiche keine Scheibenform haben, ist die Orientierung um die Einpressrichtung des Formkörpers 24 nicht eindeutig. Wenn allerdings die Ausgestaltung des Kanalsystems 19 eine bestimmte Orientierung um die Einpressrichtung des Formkörpers 24 erfordert, wie in der Ausführungsform in Figur 2 dargestellt, ist es sinnvoll, eine eindeutige Orientierung durch die Form des Formkörpers 24 zu gewährleisten. In Figur 4 sind verschiedene Möglichkeiten gezeigt, wie die Rotationssymmetrie des Formkörpers 24 um die Einpressrichtung gestört werden kann damit die Orientierung des Formkörpers 24 im Pressraum 23 der Pressform 1 eindeutig ist. Dabei ist eine eindeutige Orientierung nur dann gewährleistet, wenn die Ausnehmung 7 der Pressmuffelbasis 5 eine analoge Störung der Rotationssymmetrie aufweist. Die in den Pressraum 23 der Pressform 1 zuerst einzuführende Stirnseite des Formkörpers 24 könnte zum Beispiel abgeschrägt sein, wobei der Gradient der Abschrägung entlang der Grenzlinie zwischen den Volumenbereichen auf der Stirnseite verläuft. Der Formkörper 24 könnte auch an der Mantelfläche auf einer Seite abgeflacht sein oder eine Nut bzw. Einkerbung aufweisen. Eine Einkerbung oder Nut kann auch die in den Pressraum 23 der Pressform 1 zuerst einzuführende Stirnseite aufweisen, wenn diese Einkerbung oder Nut keine rotationsymmetrische Mehrdeutigkeit in der Orientierung um die Einpressrichtung erlaubt. In jeden Fall muss der Pressraum 23 der Pressform 1 eine entsprechende Störung der Rotationssymmetrie aufweisen, damit der Formkörper 24 passgenau eingesetzt werden kann und dann vor dem Einpressen direkt vor dem Kanalsystem 19 steht. Wenn Teile des Anstiftsystems 15 so ausgestaltet sind, dass das daraus entstehende Kanalsystem 19 einen Teil des Pressraums 23 der Pressform 1 ausmacht (siehe Figuren 7, 8, 9 und 11), dann kann auch das Anstiftsystems 15 für eine entsprechende Störung der Rotationssymmetrie im Pressraum 23 der Pressform 1 sorgen.

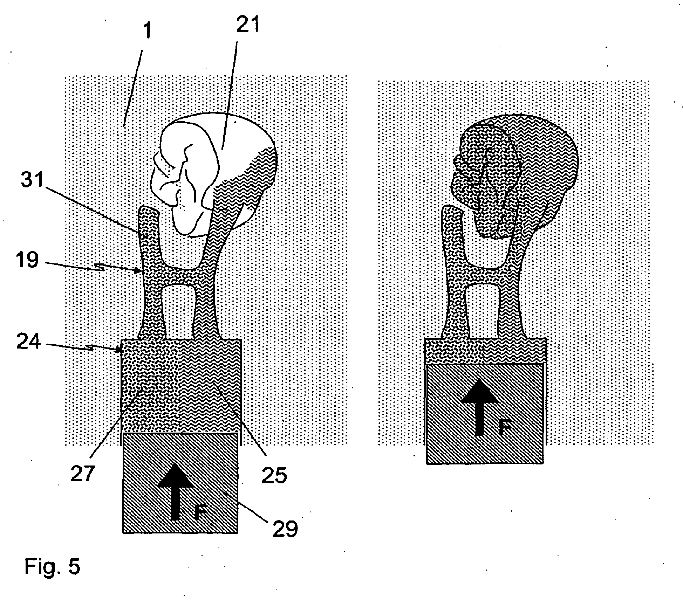

In Figur 5 ist die Ausführungsform gemäß Figur 2 detaillierter während des Einpressens bzw. nach dem Einpressen gezeigt. Während der erste Volumenbereich 25 bereits in den Formhohlraum 21 gepresst wird, befindet stich der zweite Volumenbereich 27 noch auf dem Weg entlang des zweiten Fließweges über das Bein mit dem Blindkanal 31, den Querkanal und den oberen Teil des mit dem Formhohlraum 31 verbundenen Beins zum Formhohlraum 31. Dabei ist der Blindkanal 31 gefüllt, denn der Druck in Einpressrichtung hat eine erste Fließfront des zweiten Volumenbereichs 27 zunächst in den Blindkanal 31 gepresst bis dieser gefüllt ist. Nachdem der Blindkanal 31 gefüllt ist, folgt die Fließfront des zweiten Volumenbereichs 27 dem Querkanal und schließlich dem Druck in Einpressrichtung entlang des oberen Teils des mit dem Formhohlraum 31 verbundenen Beins zum Formhohlraum 31. Der Fließweg, dem die Fließfront des zweiten Volumenbereichs 27 folgt, hat daher ein größeres Volumen als der Fließweg, dem die Fließfront des ersten Volumenbereichs 25 direkt durch das mit dem Formhohlraum 31 verbundenen Bein zum Formhohlraum 31 folgt. Im oberen Teils des mit dem Formhohlraum 31 verbundenen Beins verbinden sich die Volumenbereiche 25, 27 wieder miteinander. Nach dem Einpressen weist der Formhohlraum 31 einen höheren Volumenanteil mit dem ersten Volumenbereich 25 auf als mit dem zweiten Volumenbereichs 27. Natürlich wirkende Farb- und Opazitätsgradienten werden so in der dentalen Restauration erzielt. Im Anschluss an das Einpressen wird der eingepresste Formkörper 24 ausgehärtet. Die Pressform 1 wird dann durch Zerschneiden, Fräsen, Sandstrahlen, Ätzen und/oder anderen üblichen Verfahren entfernt. Anschließend wird die dentale Restauration, die aus der Füllung des Formhohlraums 31 besteht, von dem Material, des Formkörpers 24 getrennt, das das Kanalsystem 19 füllt. Die Stelle, an der das Modell 17 an dem Anstiftsystem 15 angebracht war, muss die dentale Restauration manuell nachgearbeitet werden, um eine dem natürlichen Zahn entsprechende mesiale und dentale Oberfläche der dentalen Restauration zu gewährleisten. Es ist von Vorteil, wenn die Anstiftung des Modells nicht okklusal, sondern mesial oder distal vorgenommen wird, denn dann ist bei der manuellen Nachbearbeitung die Form der gegenüberliegenden Zähne nicht zu berücksichtigen.

Eine weitere Ausführungsform der Erfindung ist in den Figuren 7, 8 und 9 gezeigt. Diese Ausführungsform ist besonders gut geeignet für die simultane Herstellung von mehreren dentalen Restaurationen gleichzeitig. In diesem Beispiel sind es zwei dentale Restaurationen, die gleichzeitig in einem Einpressvorgang hergestellt werden, aber es können auch mehr sein. In diesem Beispiel findet ein Formkörper 24 Verwendung, wie er in Figur 3b gezeigt ist. Die Volumenbereiche 25, 27 und 35 sind scheibenförmig und bilden zusammen den zylinderförmigen Formkörper 24. Der Volumenbereich 25 entspricht hier der Dentinmasse, der Volumenbereich 27 der Schneidemasse und der Volumenbereich 35 der cervicalen Dentinmasse. Das Kanalsystem 19 in der Pressform 1 ist in diesem Beispiel mit einem Anstiftsystem 15 erzeugt worden, wie es in Figur 11 gezeigt ist. Das Anstiftsystem 15 besteht im Wesentlichen aus einer Platte aus z.B. Plexiglas oder Wachs und kann in einen passgenauen durchgehenden Schlitz an der Stirnseite der Ausnehmung 7 der Pressmuffelbasis 5 eingesetzt werden. Dabei füllt das Anstiftsystem 15 den Schlitz vollständig aus und ragt seitlich aus den Mantelflächen der Ausnehmung 7 der Pressmuffelbasis 5. An diesen seitlichen Ausragungen werden die Modelle der dentalen Restaurationen angebracht. Das Anstiftsystem 15 weist außerdem eine Ausdehnung 30 auf, die in Einpressrichtung aus der Stirnseite der Ausnehmung 7 der Pressmuffelbasis 5 herausragt. Damit nach dem Einsetzen das Anstiftsystem 15 auch mittig in dem Schlitz an der Stirnseite der Ausnehmung 7 der Pressmuffelbasis 5 sitzt, kann das Anstiftsystem 15 eine Feder 39 aufweisen, die in eine entsprechende Nut 41 im Schlitz an der Stirnseite der Ausnehmung 7 der Pressmuffelbasis 5 greift. Nach dem Einbetten, Aushärten und Ausbrennen der Pressform 1 liegt ein Kanalsystem 19 und zwei Formhohlräume 21, wie in Figuren 7 bis 9 gezeigt, vor. Ein dritter Volumenbereich 35 des Formkörpers 24 liegt direkt an der Stirnkante des Pressraums 23 und einem Reservoir 31, das sich aus dem ausgebrannten Anstiftsystem 15 mit der Ausdehnung 30 ergibt. Weitere Reservoirs 31 sind an der Unterseite des Kanalsystems 19 angeordnet, damit der Fließweg für den zweiten Volumenbereich 27, d.h. die Schneidemasse, durch das Volumen der unteren Reservoirs 31 verläuft. Die Anzahl und Ausgestaltung von Reservoirs 31 und deren Anordnung und Orientierung am Kanalsystem 19 kann beliebig durch die Ausgestaltung des Anstiftsystems 15 gewählt werden. Der erste Volumenbereich 25 stellt hier in Form der Dentinmasse die mittlere Schicht dar, an die sich der dritte Volumenbereich 35, nämlich die cervicale Dentinmasse, anschließt, der in direktem Kontakt mit dem Presskolben 29 steht. Figur 8 zeigt, was passiert, wenn der Formkörper 24 eingepresst wird. Der dritte Volumenbereich 35 wird in das Reservoir 31 und auch seitlich in die Kanäle gepresst, während die anderen Volumenbereiche 25, 27 ausschließlich seitlich in die Kanäle gepresst werden. Da der seitliche Druck während der Füllung des oberen Reservoirs 31 mit der Entfernung zum oberen Reservoir 31 zunimmt, erfährt der dritte Volumenbereich 35 einen kleineren seitlichen Druck als die anderen Volumenbereiche 25, 27, solange das obere Reservoir 31 noch nicht gefüllt ist. Erst wenn das obere Reservoir 31 gefüllt ist, wird der dritte Volumenbereich 35 mit gleicher Kraft wie die anderen Volumenbereiche 25, 27 zu den Formhohlräumen 21 gepresst. Analog verläuft die Füllung der unteren Reservoirs 31 mit dem zweiten Volumenbereich 27, d.h. der Schneidemasse. Dadurch wird weniger Schneidemasse in die Formhohlräume 21 gepresst als Dentinmasse. Wie in Figur 8 gezeigt, hat der dritte Volumenbereich 35 bereits einen Rückstand auf die anderen Volumenbereiche 25, 27, sodass weniger Volumen der Formhohlräume 21 von dem dritten Volumenbereich 35 , d.h. der cervicalen Dentinmasse, gefüllt wird als von dem ersten Volumenbereich 25, d.h. der Dentinmasse. Es ergeben sich wegen der Reservoirs 31 für den zweiten Volumenbereich 27 und für den dritten Volumenbereich mehrere Fließfronten, die sich teilweise in die Reservoirs 31 erstrecken und somit jeweils einen gesamten Fließweg mit größerem Volumen bilden als der Fließweg des ersten Volumenbereichs 25.

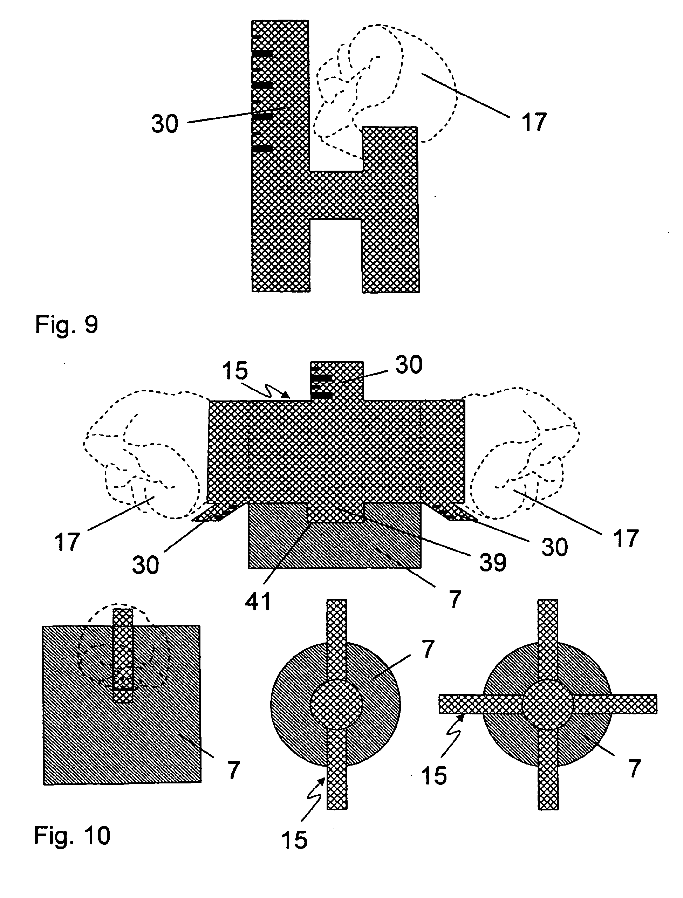

In Figur 9 ist ein H-förmiges Anstiftsystem 15 dargestellt, wie es der ersten Ausführungsform von Figur 2 entspricht. Das Bein des H-förmigen Anstiftsystems 15, das nicht für das Anstiften des Modells 17 gedacht ist, weist im oberen Teil eine Ausdehnung 30 auf, die bei der Erzeugung der Pressform 1 zu einem Blindkanal 31 führt. Da sich die Länge der Ausdehnung 30 auf das Volumen des Blindkanals 31 und somit direkt auf den Volumenanteil des zweiten Volumenbereichs 27 in der dentalen Restauration auswirkt, ist es sinnvoll, wenn die Länge für den Benutzer einstellbar ist. Vorteilhafterweise weist die Ausdehnung 30 somit eine Skala auf, anhand derer der Benutzer die Länge der Ausdehnung 30 durch Abtrennen kürzen kann, um eine gewünschte Verteilung der Volumenbereiche 25, 27 in der dentalen Restauration zu erzielen. Wie in Figur 10 gezeigt, können auch die Ausdehnungen 30 des zweiten Ausführungsbeispiels jeweils eine Skala zum Abtrennen aufweisen.

## Patentansprüche

1. Verfahren zur Herstellung von dentalen Restaurationen aus Keramik zur Erzielung von natürlich wirkenden Farb- und Opazitätsgradienten, wobei
ein Formkörper (24) aus Keramik durch ein Kanalsystem (19) in einer Pressform (1) ganz oder teilweise in einen einer dentalen Restauration entsprechenden Formhohlraum (21) in der Pressform gepresst wird, wobei
der Formkörper (24) einen ersten Volumenbereich (25) und einen zweiten Volumenbereich (27) aufweist, wobei sich der zweite Volumenbereich (27) durch eine unterschiedliche Farbe oder Opazität von dem ersten Volumenbereich (25) unterscheidet, und wobei
das Kanalsystem (19) in der Pressform (1) den Formkörper (24) beim Einpressen so in den formhohlraum (21) leitet, dass Material des ersten Volumenbereichs (25) den Formhohlraum (21) zeitlich eher erreicht als Material des zweiten Volumenbereichs (27) und/oder mehr Material des ersten Volumenbereichs (25) in den Formhohlraum (21) gepresst wird als Material des zweiten Volumenbereichs (27),
**dadurch gekennzeichnet, dass**
das Kanalsystem (19) zwei Fließwege zum Formhohlraum (21) aufweist, wobei der zweite Fließweg ein größeres Volumen hat als der erste Fließweg, und wobei Material des ersten Volumenbereichs (25) durch den ersten Fließweg in den Formhohlraum (21) gepresst wird und Material des zweiten Volumenbereichs (27) durch den zweiten Fließweg in den Formhohlraum (21) gepresst wird.

2. Verfahren nach Anspruch 1, wobei der zweite Fließweg des Kanalsystems (19) ein Reservoir (31) aufweist, und Material des zweiten Volumenbereichs (27) beim Einpressen in das Reservoir (31) gepresst wird.

3. Verfahren nach einem der vorhergehenden Ansprüche, wobei vor dem Einpressen ein Modell (17) einer dentalen Restauration aus vollständig ausbrennbaren Material mit einem Anstiftsystem (15) aus vollständig ausbrennbaren Material an eine Pressmuffelbasis (5) einer Pressmuffel (3) angebracht wird, die Pressmuffel (3) mit einer Einbettmasse gefüllt wird, sodass das Modell (17) und das Anstiftsystems (15) vollständig von der Einbettmasse umgeben werden, die Einbettmasse zu einer feuerfesten Pressform (1) ausgehärtet wird und das Modell (17) sowie das Anstiftsystem (15) ausgebrannt werden, um den einer dentalen Restauration entsprechenden Formhohlraum (21) und das Kanalsystem (19) in der ausgehärteten Pressform (1) zu erzeugen.

4. Verfahren nach Anspruch 3, wobei das Modell (17) einer dentalen Restauration mesial oder distal mit dem Anstiftsystem (15) verbunden werden.

5. System zur Herstellung von dentalen Restaurationen aus Keramik zur Erzielung von natürlich wirkenden Farb- und Opazitätsgradienten, wobei das System
einen Formkörper (24) aus Keramik,
eine Pressmuffelbasis (5) und
ein Anstiftsystem (15) aus vollständig ausbrennbaren Material umfasst, wobei
das Anstiftsystem (15) dazu dient, ein Modell (17) einer dentalen Restauration aus vollständig ausbrennbaren Material an die Pressmuffelbasis (5) anzubringen, sodass sich mittels des mit dem Anstiftsystem (15) an die Pressmuffelbasis (5) angebrachten Modells (17) eine Pressform (1) mit einem dem Anstiftsystem (15) entsprechenden Kanalsystem (19) und einem dem Modell (17) entsprechenden Formhohlraum (21) erzeugen lässt, und eine somit erzeugte Pressform (1) sich für ein Einpressen des Formkörpers (24) in den Formhohlraum (21) der Pressform (1) eignet, wobei
der Formkörper (24) einen ersten Volumenbereich (25) und einen zweiten Volumenbereich (27) aufweist, wobei sich der zweite Volumenbereich (27) durch eine unterschiedliche Farbe oder Opazität von dem ersten Volumenbereich (25) unterscheidet, und **dadurch gekennzeichnet, dass**
das Anstiftsystem (15) vorgefertigt und derart ausgestaltet ist, sodass das bei einer Erzeugung der Pressform (1) entstehende Kanalsystem (19) zwei Fließwege aufweist, wobei der zweite Fließweg ein größeres Volumen hat als der erste Fließweg, und wobei bei einem Einpressen Material des ersten Volumenbereichs (25) durch den ersten Fließweg in den Formhohlraum (21) gepresst wird und Material des zweiten Volumenbereichs (27) durch den zweiten Fließweg in den Formhohlraum (21) gepresst wird.

6. System nach Anspruch 5, wobei die Volumenbereiche (25, 27, 35) des Formkörpers (24) als voneinander getrennte Teile des Formkörpers (24) vorliegen und dazu geeignet sind, durch eine Erhitzung und/oder ein Zusammenpressen zu einem Formkörper (24) zu verschmelzen.

7. System nach Anspruch 5 oder 6, wobei das Anstiftsystem mit einer Ausdehnung (30) ausgestaltet ist, sodass sich bei einer Erzeugung der Pressform (1) ein Reservoir (31) als Teil des zweiten Fließwegs ergibt, wobei durch ein Kürzen der Ausdehnung (30) vor der Erzeugung der Pressform (1) das Volumen der Ausdehnung (30), und somit des sich ergebenden Reservoirs (31), verkleinert werden kann.

8. System nach Anspruch 5 bis 7, wobei das Anstiftsystem (15) dazu ausgestaltet ist, zwei oder mehr Modelle (17) von dentalen Restaurationen mit der Pressmuffelbasis (5) zu verbinden.

9. System nach einem der Ansprüche 5 bis 8, wobei der Farb- oder Opazitätsgradient zwischen den Volumenbereichen (25, 27, 35) des Formkörpers (24) stetig ist.

10. System nach einem der Ansprüche 5 bis 9, wobei der Formkörper (24) eine Einpressrichtung aufweist, entlang derer die Querschnittsform des Formkörpers (24) konstant ist.

11. System nach Anspruch 10, wobei der Formkörper (24) eine im Wesentlichen zylindrische Form hat.

12. System nach Anspruch 10 oder 11, wobei der erste Volumenbereich (25) und der zweite Volumenbereich (27) des Formkörpers (24) sich im Wesentlichen entlang der Einpressrichtung erstrecken und im Wesentlichen an einer Ebene mit einer Normalen, die im Wesentlichen senkrecht zur Einpressrichtung des Formkörpers (24) verläuft, einander angrenzen.

13. System nach Anspruch 10 oder 11, wobei der erste Volumenbereich (25) und der zweite Volumenbereich (27) im Wesentlichen jeweils eine Schicht des Formkörpers (24) ausmachen und im Wesentlichen an einer Ebene mit einer Normalen, die im Wesentlichen parallel zur Einpressrichtung des Formkörpers (24) verläuft, einander angrenzen.

14. System nach Anspruch 10 oder 11, wobei der erste Volumenbereich (25) und der zweite Volumenbereich (27) im Wesentlichen jeweils ein Stück des Formkörpers (24) ausmachen und im Wesentlichen an einer Ebene mit einer Normalen, die schräg zur Einpressrichtung des Formkörpers (24) verläuft, einander angrenzen.

15. System nach einem der Ansprüche 5 bis 14, wobei der Formkörper (24) zusätzlich zu dem ersten Volumenbereich (25) und dem zweiten Volumenbereich (27) mindestens einen weiteren Volumenbereich (35) aufweist, der sich durch eine unterschiedliche Farbe oder Opazität von einem benachbarten Volumenbereich (25, 27) unterscheidet.

16. System nach einem der Ansprüche 10 bis 15, wobei der Formkörper (24) eine Störung der Rotationssymmetrie entlang der Einpressrichtung aufweist, sodass beim Einpressen eine eindeutige Orientierung des Formkörpers (24) in einer Ebene mit einer Normalen, die im Wesentlichen parallel zur Einpressrichtung des Formkörpers (24) verläuft, innerhalb der Pressform (1) gewährleistet ist.

17. System nach Anspruch 16, wobei die Störung der Rotationssymmetrie in Form eines Fortsatzes, einer Längsnut, einer Abschrägung oder einer einseitigen Abflachung am Formkörper (24) dafür sorgt, dass beim Einpressen eine eindeutige Orientierung des Formkörpers (24) in einer Ebene mit einer Normalen, die im Wesentlichen parallel zur Einpressrichtung des Formkörpers (24) verläuft, innerhalb der Pressform (1) gewährleistet ist.

18. System nach einem der Ansprüche 5 bis 17, wobei die Pressmuffelbasis (5) eine Ausnehmung (7) aufweist, die im Wesentlichen der Form des Formkörpers (24) entspricht, sodass sich bei der Erzeugung der Pressform (1) durch die Ausnehmung (7) ein Pressraum (23) in der Pressform (1) ergibt, in den der Formkörper (24) zum Einpressen eingesetzt werden kann.

19. System nach Anspruch 18, wobei die Höhe der Ausnehmung (7) der Pressmuffelbasis (5) einstellbar ist, sodass sich bei der Erzeugung der Pressform (1) durch die eingestellte Höhe der Ausnehmung (7) ein Pressraum (23) mit entsprechender Tiefe in der Pressform (1) ergibt.

20. System nach einem der Ansprüche 5 bis 19, wobei das vollständig ausbrennbare Material des Anstiftsystems (15) Plexiglas oder Wachs ist.

21. Verwendung eines Formkörpers (24) aus Keramik zur Herstellung von dentalen Restaurationen aus Keramik zur Erzielung von natürlich wirkenden Farb- und Opazitätsgradienten-, wobei der Formkörper (24) einen ersten Volumenbereich (25) und einen zweiten Volumenbereich (27) aufweist, wobei sich der zweite Volumenbereich (27) durch eine unterschiedliche Farbe oder Opazität von dem ersten Volumenbereich (25) unterscheidet,
wobei der Formkörper (24) durch ein Kanalsystem (19) in einer Pressform (1) ganz oder teilweise in einen einer dentalen Restauration entsprechenden Formhohlraum (21) in der Pressform (1) gepresst wird, und wobei
das Kanalsystem (19) in der Pressform (1) den Formkörper (24) beim Einpressen so in den Formhohlraum (21) leitet, dass Material des ersten Volumenbereichs (25) den Formhohlraum zeitlich eher erreicht als Material des zweiten Volumenbereichs (27) und/oder mehr Material des ersten Volumenbereichs (25) in den Formhohlraum (21) gepresst wird als Material des zweiten Volumenbereichs (27), **dadurch gekennzeichnet, dass**
das Kanalsystem (19) zwei Fließwege zum Formhohlraum (21) aufweist, wobei der zweite Fließweg ein größeres Volumen hat als der erste Fließweg, und wobei Material des ersten Volumenbereichs (25) durch den ersten Fließweg in den Formhohlraum (21) gepresst wird und Material des zweiten Volumenbereichs (27) durch den zweiten Fließweg in den Formhohlraum (21) gepresst wird.

## Claims

1. Method for preparing dental restorations from ceramic to achieve colour and opacity gradients with a natural effect, wherein
a moulding (24) of ceramic is entirely or partially forced through a system of channels (19) in a press mould (1) into a mould cavity (21) in the press mould, wherein said mould cavity (21) corresponds to a dental restoration,
the moulding (24) has a first volume region (25) and a second volume region (27), the second volume region (27) differing from the first volume region (25) by a different colour or opacity, and
the system of channels (19) in the press mould (1) directs the moulding (24) into the mould cavity (21) in the moulding process in such a way that material of the first volume region (25) reaches the mould cavity (21) at an earlier time than material of the second volume region (27) and/or more material of the first volume region (25) than material of the second volume region (27) is forced into the mould cavity (21),
**characterized in that**
the system of channels (19) has two flow paths to the mould cavity (21), the second flow path having a greater volume than the first flow path, and material of the first volume region (25) being forced into the mould cavity (21) through the first flow path and material of the second volume region (27) being forced into the mould cavity (21) through the second flow path.

2. Method according to Claim 1, wherein the second flow path of the system of channels (19) has a reservoir (31), and material of the second volume region (27) is forced into the reservoir (31) in the moulding process.

3. Method according to one of the preceding claims, wherein, before the moulding process, a model (17) of a dental restoration made of material that can be burned out completely is fitted onto a press muffle base (5) of a press muffle (3) by a sprue pin system (15) made of material that can be burned out completely, the press muffle (3) is filled with an embedding compound, so that the model (17) and the sprue pin system (15) are completely surrounded by the embedding compound, the embedding compound is cured to form a refractory press mould (1) and the model (17) and the sprue pin system (15) are burned out, in order to produce the mould cavity (21) corresponding to a dental restoration and the system of channels (19) in the cured press mould (1).

4. Method according to Claim 3, wherein the model (17) of a dental restoration is connected mesially or distally to the sprue pin system (15).

5. System for preparing dental restorations from ceramic to achieve colour and opacity gradients with a natural effect, wherein the system comprises
a moulding (24) of ceramic or plastic,
a press muffle base (5) and
a sprue pin system (15) of material that can be burned out completely,
the sprue pin system (15) serving the purpose of fitting onto the press muffle base (5) a model (17) of a dental restoration of material that can be burned out completely, so that a press mould (1) with a system of channels (19) corresponding to the sprue pin system (15) and a mould cavity (21) corresponding to the model (17) can be produced by means of the model (17) fitted onto the press muffle base (5) by the sprue pin system (15), and a press mould (1) produced in this way being suitable for forcing the moulding (24) into the mould cavity (21) of the press mould (1),
wherein the moulding (24) has a first volume region (25) and a second volume region (27), the second volume region (27) differing from the first volume region (25) by a different colour or opacity,
and **characterized in that**
the sprue pin system (15) is prefabricated and configured in such a way that the system of channels (19) created in the production of the press mould (1) has two flow paths, the second flow path having a greater volume than the first flow path, and material of the first volume region (25) being forced into the mould cavity (21) through the first flow path and material of the second volume region (27) being forced into the mould cavity (21) through the second flow path in a moulding process.

6. System according to Claim 5, wherein the volume regions (25, 27, 35) of the moulding (24) take the form of parts of the moulding (24) that are separate from one another and are suitable for fusing to form a moulding (24) by heating and/or pressing together.

7. System according to Claim 5 or 6, wherein the sprue pin system is configured with an extension (30), so that a reservoir (31) is obtained as part of the second flow path in the production of the press mould (1), it being possible for the volume of the extension (30), and consequently the resultant reservoir (31), to be reduced by shortening the extension (30) before the press mould (1) is produced.

8. System according to one of Claims 5 to 7, wherein the sprue pin system (15) is configured for the purpose of connecting two or more models (17) of dental restorations to the press muffle base (5).

9. System according to one of Claims 5 to 8, wherein the colour or opacity gradients between the volume regions (25, 37, 35) of the moulding (24) is steady.

10. System according to one of Claims 5 to 9, wherein the moulding (24) has a moulding direction, along which the cross-sectional form of the moulding (24) is constant.

11. System according to Claim 10, wherein the moulding (24) has a substantially cylindrical form.

12. System according to Claim 10 or 11, wherein the first volume region (25) and the second volume region (27) of the moulding (24) extend substantially along the moulding direction and are substantially adjacent to one another at a plane with a normal that extends substantially perpendicularly to the moulding direction of the moulding (24).

13. System according to Claim 10 or 11, wherein the first volume region (25) and the second volume region (27) in each case substantially make up a layer of the moulding (24) and are substantially adjacent to one another at a plane with a normal that extends substantially parallel to the moulding direction of the moulding (24).

14. System according to 10 or 11, wherein the first volume region (25) and the second volume region (27) in each case make up a piece of the moulding (24) and are substantially adjacent to one another at a plane with a normal that extends obliquely to the moulding direction of the moulding (24).

15. System according to one of Claims 5 to 14, wherein the moulding (24) has in addition to the first volume region (25) and the second volume region (27) at least one further volume region (36), which differs from a neighbouring volume region (25, 27) by a different colour or opacity.

16. System according to one of Claims 10 to 15, wherein the moulding (24) has a disturbance of the rotational symmetry along the moulding direction, so that a distinct orientation of the moulding (24) in a plane with a normal that extends substantially parallel to the moulding direction of the moulding (24) is ensured within the press mould (1) in the moulding process.

17. System according to Claims 16, wherein the disturbance of the rotational symmetry in the form of a continuation, a longitudinal groove, a bevelling or a one-sided flattening on the moulding (24) provides that a distinct orientation of the moulding (24) in a plane with a normal that extends substantially parallel to the moulding direction of the moulding (24) is ensured within the press mould (1) in the moulding process.

18. System according to one of Claims 5 to 17, wherein the press muffle base (5) has a extension (7), which corresponds substantially to the form of the moulding (24), so that a press space (23) into which the moulding (24) can be inserted for the moulding process is obtained in the press mould (1) in the production of the press mould (1) as a result of the extension (7).

19. System according to Claim 18, wherein the height of the recess (7) in the press muffle base (5) is adjustable, so that a press space (23) with a corresponding depth is obtained in the press mould (1) in the production of the press mould (1) as a result of the adjusted height of the extension (7).

20. System according to one of Claims 5 to 19, wherein the material of the sprue pin system (15) that can be burned out completely is plexiglass or wax.

21. Use of a moulding (24) of ceramic for preparing dental restorations from ceramic to achieve colour and opacity gradients with a natural effect, wherein the moulding (24) has a first volume region (25) and a second volume region (27), the second volume region (27) differing from the first volume region (25) by a different colour or opacity, wherein
the moulding (24) is entirely or partially forced through a system of channels (19) in a press mould (1) into a mould cavity (21) in the press mould (1), wherein said mould cavity (21) corresponds to a dental restoration, and
in the moulding process, the system of channels (19) in the press mould (1) directs the moulding (24) into the mould cavity (21) in such a way that material of the first volume region (25) reaches the mould cavity at an earlier time than material of the second mould region (27) and/or more material of the first volume region (25) than material of the second volume region (27) is forced into the mould cavity (21),
**characterized in that**
the channel system (19) comprises two flow paths to the mould cavity (21), the second flow path having a greater volume than the first flow path, and that material of the first volume region (25) is forced into the mould cavity (21) through the first flow path and that material of the second volume region (27) is forced into the mould cavity (21) through the second flow path.

## Revendications

1. Procédé de fabrication de restaurations dentaires en céramique, en vue d'obtenir des gradients de couleur et d'opacité naturels, selon lequel
un corps à mouler (24) en céramique est pressé à travers un système de canaux (19), prévu dans un moule (1), en partie ou en totalité dans une empreinte (21) du moule, qui correspond à une restauration dentaire, selon lequel
le corps à mouler (24) présente une première zone de volume (25) et une deuxième zone de volume (27), la deuxième zone (27) se distinguant de la première zone (25) par une couleur ou une opacité différente, et selon lequel
le système de canaux (19) dans le moule (1) guide le corps à mouler (24), lors de la pressée, dans l'empreinte (21) de manière telle que la matière de la première zone de volume (25) arrive dans l'empreinte (21) avant la matière de la deuxième zone de volume (27) et/ou une quantité de matière de la première zone de volume (25) est pressée dans l'empreinte (21), qui est plus grande que la quantité de matière de la deuxième zone de volume (27), **caractérisé par le fait que**
le système de canaux (19) comporte deux chemins d'écoulement vers l'empreinte (21), le deuxième chemin d'écoulement ayant un volume plus important que le premier, et la matière de la première zone de volume (25) étant pressée dans l'empreinte (21) en passant par le premier chemin d'écoulement, et la matière de la deuxième zone de volume (27) étant pressée dans l'empreinte (21) en passant par le deuxième chemin d'écoulement.

2. Procédé selon la revendication 1, selon lequel le deuxième chemin d'écoulement du système de canaux (19) présente un réservoir (31) et, lors de la pressée, de la matière provenant de la deuxième zone de volume (27) est poussée dans ce réservoir (31).

3. Procédé selon une des revendications précédentes, selon lequel, avant la pressée, un modèle (17) d'une restauration dentaire, constitué d'un matériau pouvant être éliminé entièrement par fusion et doté d'un système de fixation (15) en un matériau pouvant être éliminé entièrement par fusion, est installé sur un socle (5) de four de pressée (3), le four (3) est rempli avec une masse d'enrobage de manière à ce que le modèle (17) et le système de fixation (15) soient entourés entièrement par cette masse, la masse d'enrobage est durcie pour obtenir un moule (1) réfractaire, et le modèle (17) ainsi que le système de fixation (15) sont éliminés par fusion pour réaliser dans le moule (1) durci une empreinte (21), correspondant à une restauration dentaire, ainsi que le système de canaux (19).

4. Procédé selon la revendication 3, selon lequel le modèle (17) d'une restauration dentaire est relié de manière mésiale ou distale au système de fixation (15).

5. Système de fabrication de restaurations dentaires en céramique, en vue d'obtenir des gradients de couleur et d'opacité naturels, ledit système comprenant
un corps à mouler (24) en céramique,
un socle de four de pressée (5), et
un système de fixation (15) en un matériau pouvant être éliminé entièrement par fusion, où
le système de fixation (15) sert à monter un modèle (17) d'une restauration dentaire, constitué d'un matériau pouvant être éliminé entièrement par fusion, sur le socle de four de pressée (5), de sorte que ledit modèle (17), fixé au socle de four de pressée (5) à l'aide du système de fixation (15), permet de réaliser un moule (1) avec un système de canaux (19), correspondant au système de fixation (15), et une empreinte (21) correspondant au modèle (17), et un moule (1) ainsi réalisé est adapté pour presser le corps à mouler (24) dans l'empreinte (21) du moule (1), où
le corps à mouler (24) présente une première zone de volume (25) et une deuxième zone de volume (27), la deuxième zone (27) se distinguant de la première zone (25) par une couleur ou une opacité différente, **caractérisé par le fait que**
le système de fixation (15) est préfabriqué et agencé de manière telle que le système de canaux (19) créé lors d'une réalisation du moule (1) comporte deux chemins d'écoulement, le deuxième chemin d'écoulement ayant un volume plus important que le premier et, lors d'une pressée, la matière de la première zone de volume (25) étant pressée dans l'empreinte (21) en passant par le premier chemin d'écoulement, et la matière de la deuxième zone de volume (27) étant pressée dans l'empreinte (21) en passant par le deuxième chemin d'écoulement.

6. Système selon la revendication 5, dans lequel les zones de volume (25, 27, 35) du corps à mouler (24) se présentent sous forme de parties séparées du corps à mouler (24) et sont appropriées pour fondre et former un corps à mouler (24), sous l'effet d'un réchauffage et/ou d'une compression.

7. Système selon la revendication 5 ou 6, dans lequel le système de fixation est doté d'une extension (30) de manière à former, lors de la réalisation d'un moule (1), un réservoir (31) en tant que partie du deuxième chemin d'écoulement, le raccourcissement de l'extension (30), avant la réalisation du moule (1), permettant de réduire le volume de cette extension (30) et donc du réservoir (31) formé.

8. Système selon les revendications 5 à 7, dans lequel le système de fixation (15) est agencé pour relier deux ou plus de deux modèles (17) de restaurations dentaires au socle de four de pressée (5).

9. Système selon une des revendications 5 à 8, dans lequel le gradient de couleur ou d'opacité entre les zones de volume (25, 27, 35) du corps à mouler (24) est constant..

10. Système selon une des revendications 5 à 9, dans lequel le corps à mouler (24) présente un sens de pressée dans lequel le profil transversal du corps à mouler (24) est constant.

11. Système selon la revendication 10, dans lequel le corps à mouler (24) a une forme sensiblement cylindrique.

12. Système selon la revendication 10 ou 11, dans lequel la première zone de volume (25) et la deuxième zone de volume (27) du corps à mouler (24) s'étendent sensiblement dans le sens de pressée et sont contiguës l'une à l'autre dans un plan avec une normale qui est sensiblement perpendiculaire au sens de pression du corps à mouler (24).

13. Système selon la revendication 10 ou 11, dans lequel la première zone de volume (25) et la deuxième zone de volume (27) constituent chacune sensiblement une couche du corps à mouler (24) et sont contiguës l'une à l'autre dans un plan avec une normale qui est sensiblement parallèle au sens de pressée du corps à mouler (24).

14. Système selon la revendication 10 ou 11, dans lequel la première zone de volume (25) et la deuxième zone de volume (27) forment chacune sensiblement une portion du corps à mouler (24) et sont contiguës l'une à l'autre dans un plan avec une normale qui s'étend en biais par rapport au sens de pressée du corps à mouler (24).

15. Système selon une des revendications 5 à 14, dans lequel le corps à mouler (24) présente, en plus des première (25) et deuxième (27) zones de volume, au moins une zone de volume (35) supplémentaire qui se distingue d'une zone de volume (25, 27) voisine par une couleur ou une opacité différente.

16. Système selon une des revendications 10 à 15, dans lequel le corps à mouler (24) présente une interruption de la symétrie de révolution dans le sens de pressée, de sorte que lors de la pressée, une orientation univoque du corps à mouler (24) est garantie dans un plan avec une normale qui est sensiblement parallèle au sens de pressée du corps à mouler (24), à l'intérieur du moule (1).

17. Système selon la revendication 16, dans lequel l'interruption de la symétrie de révolution, se présentant sous la forme d'une saillie, d'une rainure longitudinale, d'un plan oblique ou d'un méplat unilatéral sur le corps à mouler (24), a pour effet de garantir, lors de la pressée, une orientation univoque du corps à mouler (24) à l'intérieur du moule (1), dans un plan avec une normale qui est sensiblement parallèle au sens de pressée.

18. Système selon une des revendications 5 à 17, dans lequel le socle de four de pressée (5) comporte un élément creux (7) qui correspond sensiblement à la forme du corps à mouler (24), de sorte que lors de la réalisation du moule (1), cet élément creux (7) crée une cavité de pressée (23) dans le moule (1), dans laquelle le corps à mouler (24) peut être engagé en vue de l'opération de pressée.

19. Système selon la revendication 18, dans lequel la hauteur de l'élément creux (7) du socle de four de pressée (5) est réglable, de sorte que lors de la réalisation du moule (1), la hauteur de l'élément creux (7) crée une cavité de pressée (23) de profondeur correspondante dans le moule (1).

20. Système selon une des revendications 5 à 19, dans lequel le matériau pouvant être éliminé entièrement par fusion du système de fixation (15) est du plexiglas ou de la cire.

21. Utilisation d'un corps à mouler (24) en céramique pour fabriquer des restaurations dentaires en céramique, en vue d'obtenir des gradients de couleur et d'opacité naturels, le corps à mouler (24) présentant une première zone de volume (25) et une deuxième zone de volume (27), la deuxième zone (27) se distinguant de la première zone (25) par une couleur ou une opacité différente,
le corps à mouler (24) étant pressé à travers un système de canaux (19), prévu dans un moule (1), en partie ou en totalité dans une empreinte (21) du moule qui correspond à une restauration dentaire, et
le système de canaux (19) dans le moule (1) guidant le corps à mouler (24), lors de la pressée, dans l'empreinte (21) de manière telle que la matière de la première zone de volume (25) arrive dans l'empreinte avant la matière de la deuxième zone de volume (27) et/ou une quantité de matière provenant de la première zone de volume (25) est pressée dans l'empreinte (21), qui est plus grande que la quantité de matière de la deuxième zone de volume (27), **caractérisé par le fait que**
le système de canaux (19) comporte deux chemins d'écoulement vers l'empreinte (21), le deuxième chemin d'écoulement ayant un volume plus important que le premier, et la matière de la première zone de volume (25) étant pressée dans l'empreinte (21) en passant par le premier chemin d'écoulement, et la matière de la deuxième zone de volume (27) étant pressée dans l'empreinte (21) en passant par le deuxième chemin d'écoulement.
